# EUROPEAN PATENT SPECIFICATION

(11) **EP 1 728 654 B1**
(45) Date of publication and mention of the grant of the patent: **16.02.2011**
(21) Application number: 06252792.4
(22) Date of filing: 30.05.2006
(51) Int. Cl.: B60G 7/00, B60G 9/00

(54) **A suspension trailing arm**
Längsarmaufhängung
Suspension à bras tirés

(30) Priority: 03.06.2005 GB 0511310
(43) Date of publication of application: 06.12.2006
(73) Proprietor: Meritor Heavy Vehicle Systems Limited, Llay, Wrexham, Clwyd LL12 0PB (GB)
(72) Inventor: Peaker, Martin Lawrence, Upton, Chester CH2 1NE (GB); Chan, David John, Hawarden, Flintshire CH5 3LH (GB)
(74) Representative: Foot, Paul Matthew James

(56) References cited:
- EP-A- 0 229 576
- EP-A- 0 243 191
- WO-A-2004/054825
- WO-A-2005/028221

## Description

The present invention relates to a suspension trailing arm. More particularly, the present invention relates to suspension trailing arm having a portion with a generally X-section profile, and a suspension assembly incorporating such a trailing arm.

Heavy commercial vehicles typically employ trailing arm suspension systems, particularly in relation to the axles of trailers of articulated vehicles or, potentially, rear axles of rigid body vehicles.

Heavy commercial vehicles (including trucks, buses and coaches) can be distinguished from light commercial vehicles (such as vans) and light passenger vehicles due to one or more of the following characteristics:
1. A laden weight in excess of approximately 3.5 tonnes.
2. The use of air actuated brakes as opposed to hydraulically actuated brakes (because air actuated brakes are more able to withstand the increased heat generated by the repeated braking of a vehicle having a weight in excess of approximately 3.5 tonnes).

Such vehicles (including trailers) also typically employ a pair of spaced parallel beams that run the length of the vehicle and act as the chassis upon which the vehicle body is mounted.

When used in heavy commercial vehicles, the trailing arms are typically pivotally mounted to the chassis beams of the vehicle at the front of the arm, the arm extending rearwardly (i.e. towards the rear of the vehicle) to a mounting position for the axle and then further rearwardly to a mounting surface for an air spring, that is itself mounted between the trailing arm and vehicle chassis. Axles in such vehicles are typically substantially rigid beam-type axles (i.e. axles that extend between the spindles upon which wheels at opposite sides of a vehicle are mounted). In some circumstances the orientation of the arms may be reversed so as to pivot at the rear of the arm, in which case they are known as "leading arms". For the purposes of this specification the term trailing arm should also be understood to encompass leading arms.

Known heavy vehicle trailing arms are typically constructed either from solid spring steel trailing arms provided with U-bolts and plates to connect an axle to the arm, fabricated steel plate which is then welded to an axle or axle adapter, or a hybrid of the two aforesaid types. An example of a fabricated trailing arm is disclosed in US 5639110 (Pierce et al.). Both prior art types seek to provide a rigid connection between the arm and axle in order to resist bending but have a resilient connection between the chassis and axle, either by flexing of the spring steel trailing arm or by flexing of a large elastomeric bush (resilient bearing) in the end of a fabricated trailing arm. This enables articulation forces induced during vehicle use to be taken up whilst maintaining tracking and roll stability.

It is known from the present applicant's earlier published application WO 2004/054825 to cast or forged trailing arms having an I- or C-section profile and a direct beam-to-axle connection, and such arms provide advantages over fabricated and spring steel arms in terms of their manufacture, strength and packaging.

Cast and forged trailing arms have hitherto tended to be made with "traditional" beam-type profiles, whereas the applicant has now recognised that there is scope for further improvements to be achieved in strength, durability and weight reduction for trailing arms by moving away from such traditional shapes.

Accordingly, a first aspect of the present invention provides a suspension trailing arm for suspending a vehicle chassis from a beam type axle, the trailing arm comprising a chassis mounting feature, an axle mounting feature, and an arm portion intermediate the chassis mounting feature and an axle mounting feature, wherein the arm portion comprises a generally X-section profile having four limbs.

Embodiments of the present invention are now described, by way of example only, with reference to the accompanying drawings in which:
FIGURE 1 is a side view of a typical heavy commercial vehicle;
FIGURE 2 is a perspective view of a prior art suspension assembly;
FIGURES 3 and 4 are a perspective views of another prior art suspension trailing arm;
FIGURES 5 and 6 are perspective views of a suspension trailing arm according to an embodiment of the present invention, together with various ancillary components.
FIGURES 7A to 7E are side, plan and end views illustrating a portion of the trailing arm of Figures 5 and 6;
FIGURE 8 is a perspective view of a portion of the trailing arm of Figures 5 and 6;
FIGURE 9 illustrates various transverse cross-sections through a portion of the trailing arm of Figures 5 and 6;
FIGURE 10 is a perspective view of a trailing arm according to a second embodiment of the present invention together with various ancillary components;
FIGURE 11 is a detail view of mating edges of front and rear portions of an axle wrap of the arm of the first embodiment; and
FIGURES 12 and 13 are detail cross-sectional views of the welds along the mating edge and opening edges of the arm of the first embodiment.

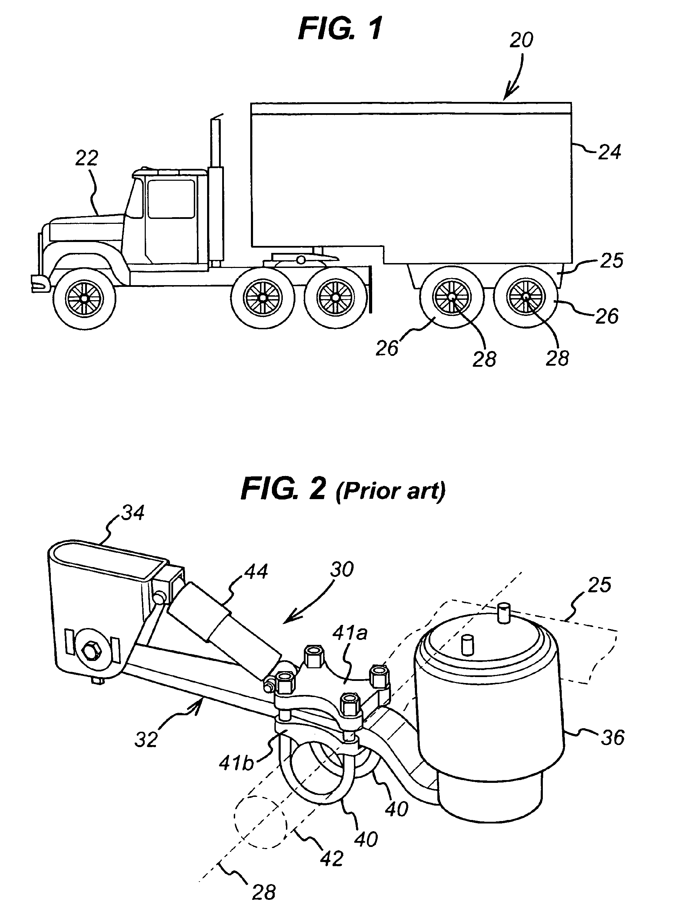

Figure 1 shows a heavy commercial vehicle 20 comprising a tractor portion 22 and a trailer portion 24 mounted for articulation relative to the tractor portion. A plurality of wheels 26 are suspended from a chassis 25 of the trailer portion so that the wheels rotate about axes 28.

Turning to Figure 2 in which a prior art suspension assembly 30 is shown, this briefly comprises a spring steel suspension arm 32, a chassis support bracket 34 and an air spring 36. The support bracket 34 and air spring 36 provide a connection with, and suspension relative to, the trailer chassis 25 (shown in broken lines for clarity) in a known manner. U-bolts 40 and top and bottom plates 41 a and 41b provide a means of mounting an axle 42 (shown in broken lines for clarity) to the trailing arm 32. In particular it should be noted that bottom plate 41b is welded directly to axle 42. Wheels (not shown) are secured to each end of the axle 42 for rotation about axis 28. A damper 44 mounted between support bracket 34 and U-bolt and plate assembly 40 is provided to damp oscillations of the axle 42 relative to the chassis 25 as the vehicle 20 drives over uneven ground.

It will be appreciated that a considerable amount of assembly is required and a large number of components are needed to provide a complete suspension assembly of this type.

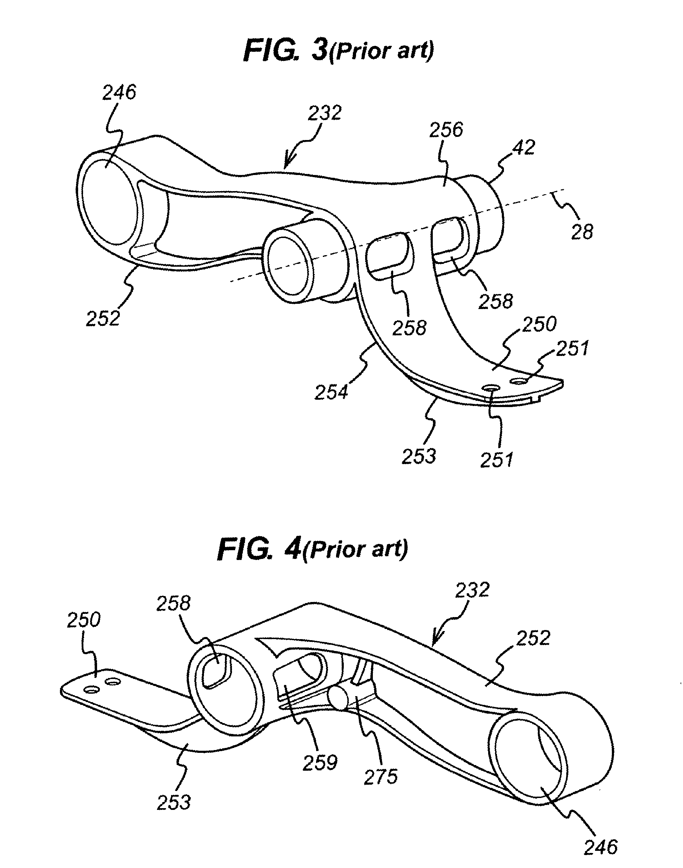

Turning to Figures 3 and 4, these show a trailing arm 232 of the type shown in the applicant's earlier published application WO 2004/054825 to which a conventional beam-type axle 42 is mounted (Figure 3 only). The trailing arm 232 is cast as a single piece or in two pieces and, has a front portion 252 and a rear portion 254 separated by an axle locating portion or feature in the form of a cast axle wrap 256 dimensioned to receive the axle 42 therethrough.

The leading end of the front portion 252 is cast so as to provide a bearing mounting 246 to receive a resilient bearing (not shown) that mounts the trailing arm 232 to a chassis support bracket (not shown) in a similar manner to the arm of Figure 2. Intermediate the axle wrap 256 and bearing mounting 246, the front portion 252 is cast with an I-section profile.

The rear portion 254 is provided with an upwardly facing substantially planar surface 250 upon which an air spring (not shown) may be received. Through holes 251 may further be provided on surface 250 in order to securely locate the air spring on the surface by the use of bolts therethrough, for example. A downwardly extending web 253 may be provided therein so to form a shallow T-section and impart sufficient strength to this portion of the arm 232.

Openings 258 are provided in the cast wall that constitutes the axle wrap 256. The openings enable the axle 42 to be securely ring or fillet welded to the trailing arm 232 around the edge of the openings 258. A similar opening 259 is provided on the opposite side of the wrap 256 for a similar purpose. The arm may be cast or forged from iron or steel.

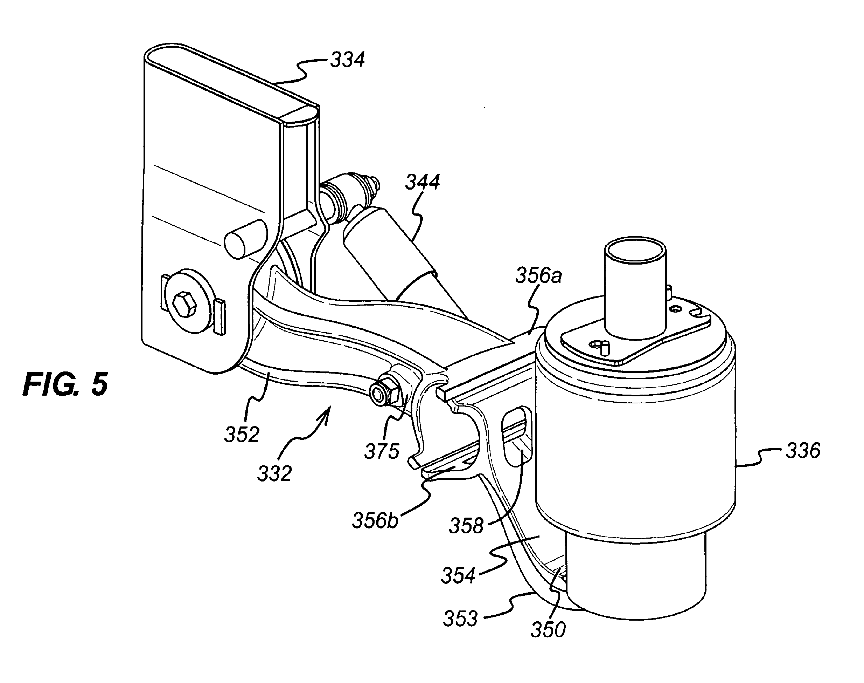

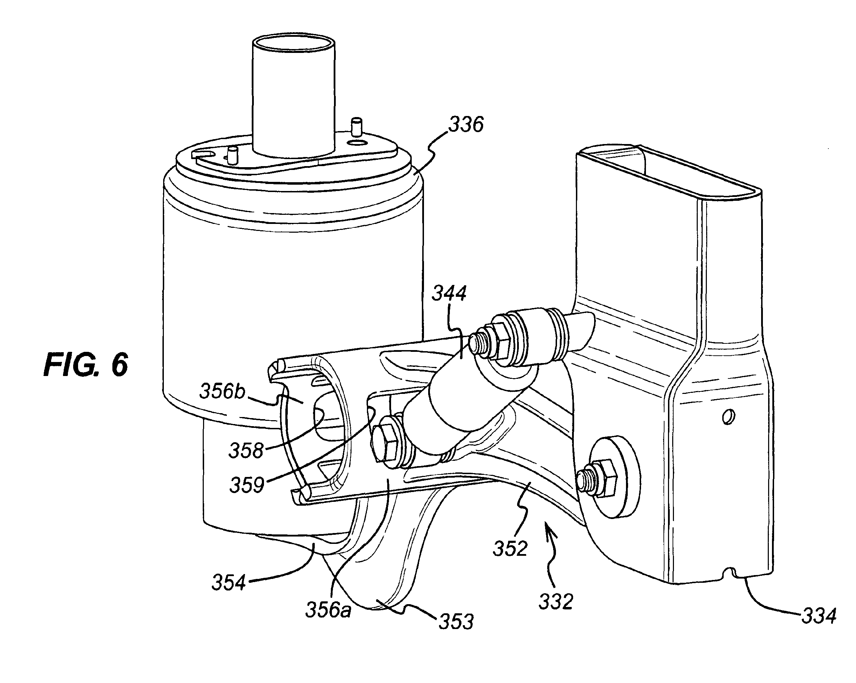

Referring to Figure 5 and 6, a trailing arm according to the present invention, together with various ancillary components is illustrated in which like parts have been designated, where possible by like numerals with respect to Figures 3 and 4 but with the prefix "2" being replaced by the prefix "3".

It can be seen that in the present invention the front portion 352 is provided as a separate piece from the rear portion 354 (although the two may have been cast or forged together and subsequently separated). Thus, the axle wrap is constituted from two separate portions 356a of front arm portion 352 and 356b of rear arm portion 354. As in the prior art arm of Figures 3 and 4, openings or windows 358 and 359 are provided in the wrap portions. The openings 358 and 359 permit each wrap portion 356a and 356b to be independently ring or fillet welded to the axle 42.

Specifically, the trailing arm 332 is secured at the leading edge of the front portion 352 to a chassis support (hanger bracket) 334 via a resilient bearing that is not visible. A damper 344 is pivoting mounted to both the hanger bracket 334 from portion 352 in order to damp the up and down motion of the trailing arm in use. A mounting feature in the form of a mounting hole (not visible) in a thickened mounting boss 375 extends transversely through the front portion of the arm such that the damper 344 may be secured to the arm by a bolt and nut connection through the boss.

The rear portion 354 is provided with upwardly facing substantially planar surface 350 upon which an air spring 336 is received. The upper end of the air spring 336 may be secured to the underside of the chassis, as is well known. Through holes (non visible) may be provided on surface 350 in order to securely locate the air spring on the surface by the use of bolts, for example. A downwardly extending web 353 may be provided therein so as to form a shallow T-section impart sufficient strength to the rear portion 354.

As in the prior art of Figures 3 and 4, openings 358 and 359 are provided respectively in the cast wall that constitutes the front and rear parts of axle wrap 356a and 356b respectively. The openings 358 and 359 enable an axle to be securely ring or fillet welded to the trailing arm 332 around the edge of the openings to ensure a secure connection between the trailing arm and the axle. The welding process is discussed in more detail below.

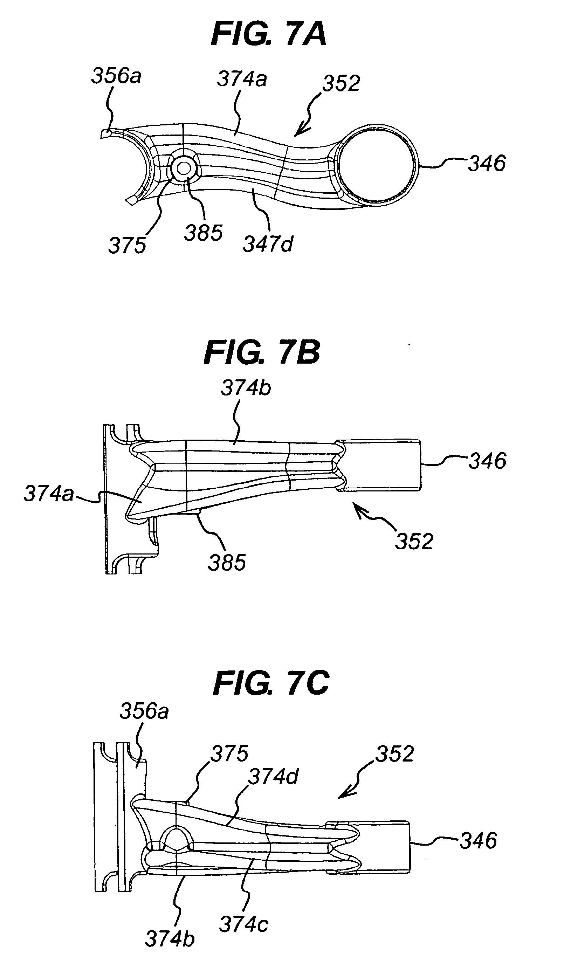

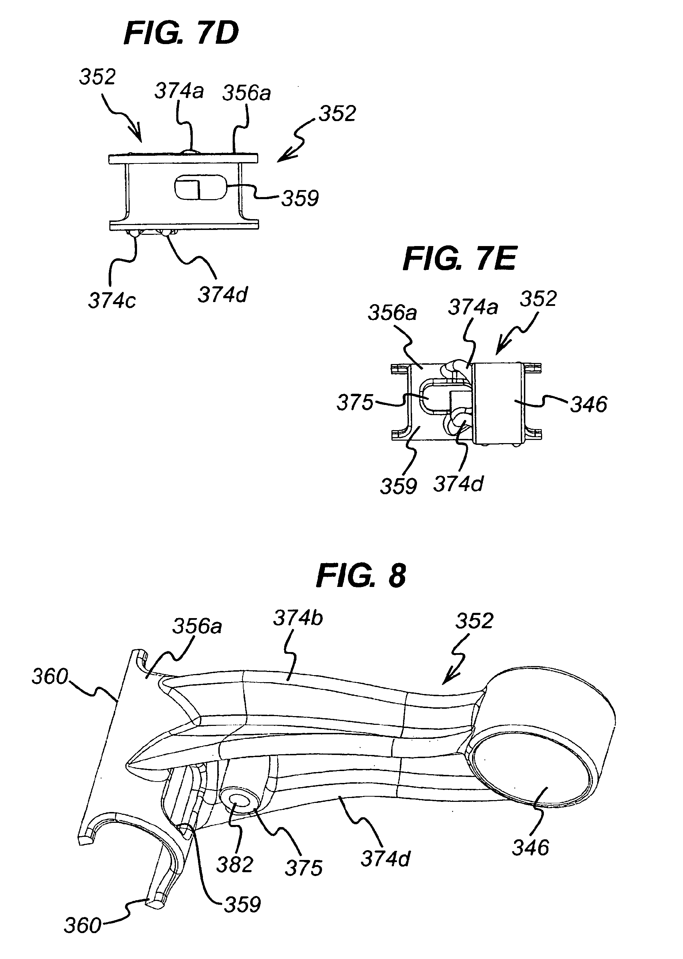

The trailing arm 332 of the present invention differs from the prior art primarily that the front arm portion 352 intermediate the chassis mounting feature and axle mounting feature has a generally X-section profile. The particular shape of this X-section is illustrated more clearly in Figures 7A to 9.

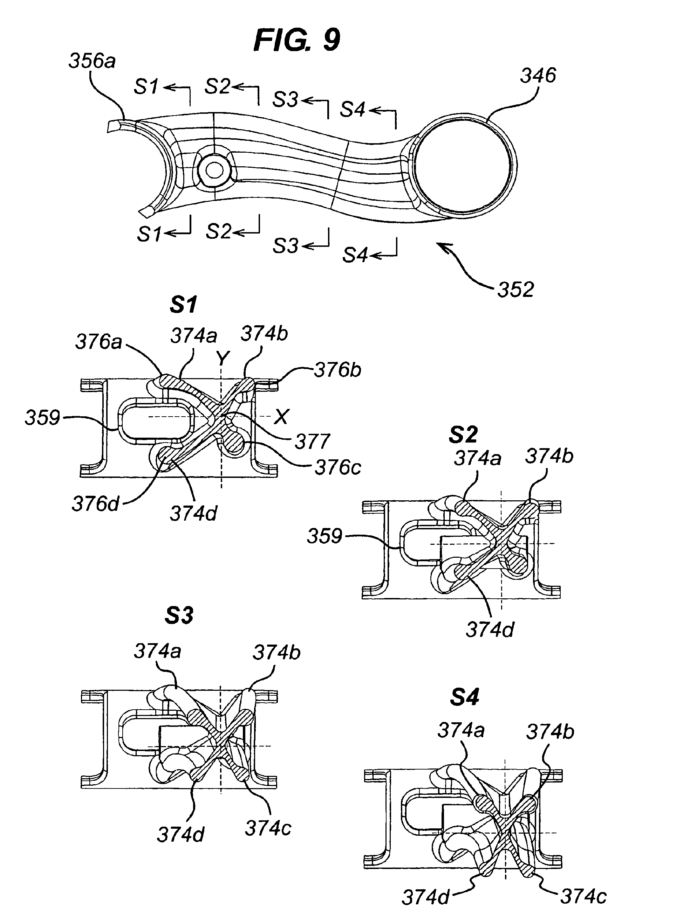

With reference to these figures, it can be noted that in this embodiment, the profile of the X-section varies along the length of arm portion in a number of different ways. With reference in particular to Figure 9 and the cross sections thereof S1 to S4, it should be noted that the X-section comprises first, second, third and fourth limbs 374a, 374b, 374c and 374d that converge to a centre point 377. Each limb terminates in an enlarged free end portion 376a, 376b, 376c and 376d respectively. From Figure 7A in particular, it can be noted that the arm portion generally, and each limb specifically, follows a generally S-shaped path from the chassis bush 346 to the axle wrap portion 356a. This has advantages in terms of the packaging of other components around the arm, such as brake actuators, whilst at the same time maintaining the strength of the arm. It is also apparent from Figures 7A to 7E, as well as Figures 5 and 6 that the arm portion merges smoothly into the chassis bush 346 and the axle wrap 356a in order to avoid locations that act as stress raisers when the trailing arm is in use.

With reference to the transverse cross sections through the arm portion S1 to S4, some considerable variations can be seen in the size and shape of each limb along the length of the arm portion.

Starting near the front of the arm portion at cross section S4, and considering the first limb 374a, it is apparent that this limb extends from the centre point 377 at approximately 60° near the front of the arm portion and terminates in a free end having a relatively bulbous shape. As the limb extends rearwards, the angle with respect to X-axis becomes progressively shallower so that at cross section S1, near the axle wrap portion 356a, the angle is approximately 45°, proximate to point 377 but becomes progressively shallower near the free end so that the angle proximate the free end is around 20° with respect to the X-axis. In addition, the free end 376a is somewhat less bulbous than at cross-section S4. This lengthening of the limb proximate the axle wrap portion 356a reflects the greater need to resist to bending moments about a vertical axis imposed on the trailing arm proximate the axle wrap, due to forces induced on the axle in cornering.

The second limb 374b is substantially a mirror image of the first limb about the Y-axis, proximate the chassis bush, as shown in cross section S4. However, in this embodiment, the angle of the second limb 374b varies only slightly along the length. Similarly, the thickness of the limb and size and shape of the free end portion vary only slightly along the length of the arm. However, in common with the rest of the arm portion, the second limb follows the generally S-shaped curve along its length.

The third limb 374c is angled downwardly from the X-axis by approximately 60° and has a relatively small bulbous free end portion 376c, proximate the chassis bush and a relatively thin web intermediate the centre 377 and free end 376c. As the limb extends towards the axle wrap 356a, the length of the limb overall, and the length of the web portion in particular, reduces and the size of the bulbous free end portion increases, so that the depth of the third limb 374c in both the X and Y directions decreases towards the axle wrap 356a. This particular shape provides more space for the fitment of a disc brake and its associated actuator outboard of the limb, and also underneath the limb. As the third limb 374c approaches the axle wrap portion it merges into the boss 375 provided for the fitment of damper 344, before reverting to its original shape.

The fourth limb 374d extends substantially as a mirror image of the first limb 347a about the X-axis. This limb extends from a starting point proximate the chassis bushing with a lowest point that is slightly higher than the third limb 374c and the merges with the axle wrap 356a at a significantly lower point by comparison with the third limb 374c. In this way, it avoids interference with the window 359 in the axle wrap 356a. Although the fourth limb 374d is largely a mirror image of the first limb 374a, it should be noted that proximate the axle wrap 356a, the bulbous free end portion 376d comprises more material than the corresponding free end portion at 376a of the first limb. Additionally, the limb is substantially straight along its radial length, rather than having the curved shape of the first limb. Again, the fourth limb merges into the boss 375 proximate the wrap, before reverting to its original shape when merging into the wrap.

It should be noted, that along the length of the arm portion, all surfaces of the arm are smooth and rounded to avoid any locations that act as stress raisers.

The arm 332 may be made using any suitable casting or forging process and may be cast or forged from any suitable material having sufficient strength and durability properties for this particular application, such as cast iron or cast steel. One advantage of cast steel is that the weldability of the arm is improved. In some embodiments surfaces of the arm 332 are machined to provide a suitable surface finish for fitment to the axle or other components, or to remove any stress raising surface contours. The arm 332 is of sufficient strength for use in suspending an axle rated at six tonnes.

The shape of the arm has arisen out of a recognition that box-sections, I-sections and the like that have conventionally been used in the construction of trailing arms, do not represent an optimum solution for high strength, low weight arms, when other factors such as the packaging of brake and actuator components and cornering loads are considered. The use of a substantially X-section together, in particular, with enlarged free end portions along the length thereof enables an arm to be designed for a particular application with the optimum second moment of area and bending strength in the necessary locations. The geometry, shape and thickness of the arm may be altered in a number of different ways to optimise its strength to weight ratio.

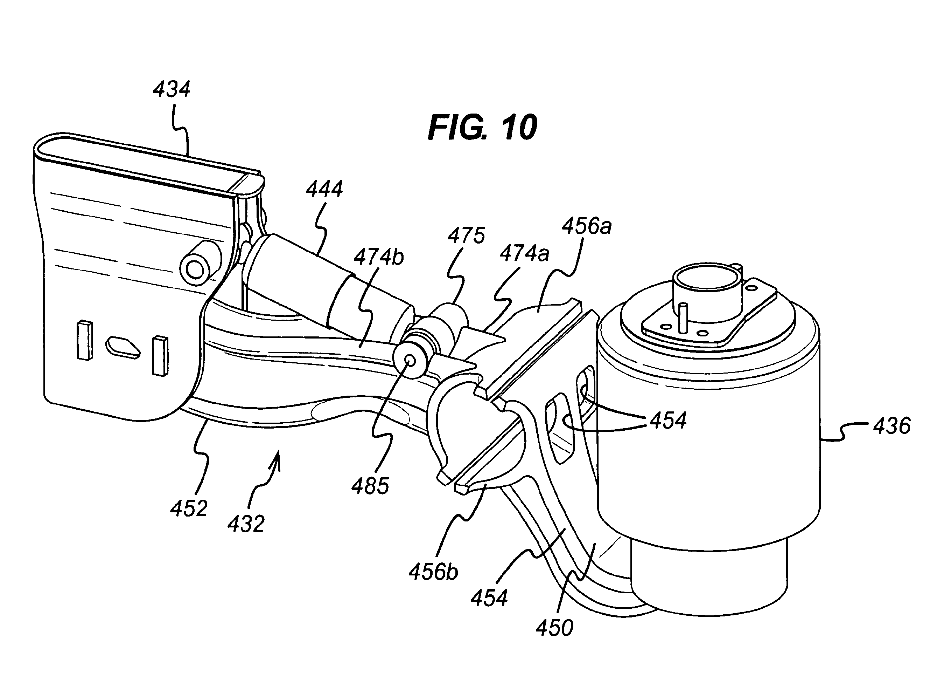

With reference to Figure 10 a second embodiment of the present invention is shown like parts have been designated by like numerals, where possible, but with the prefix "4" replacing the prefix "3".

The second embodiment differs from the first embodiment in that the damper mounting feature on the arm 432 comprises of two aligned bosses 475 with coaxial bores 485 positioned on top of the first and fourth limbs with a gap in between so that a bolt can extend therethrough and the damper 444 can sit within a trough between the first and fourth limbs. This arrangement is particularly advantageous since it minimises the clearance required to mount the damper 444 directly above the arm, by comparison with existing conventional arms. Furthermore, the relocation of the boss 475 enables a portion of the second limb to be cut away and thereby provide more clearance for brake components, in particular.

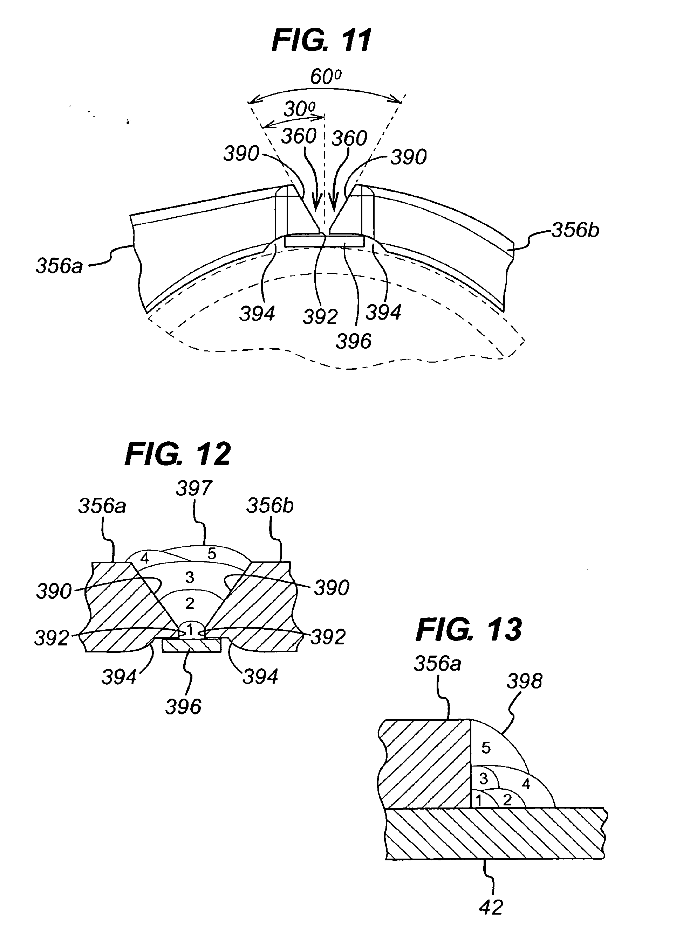

With reference to Figures 11 to 13, the currently preferred method of welding the front and rear sections of the trailing arm of the present invention to an axle, and to each other, are shown.

It can be seen from Figures 5 and 8 that both the front and rear axle wrap portions 356a and 356b are locally widened in the axial direction of axle 42 close to edges 360 so that the length of these edges is increased. This provides greater weld length between each edge surface, thereby providing a stronger join. It also means that the weld between the two edges 360 does not terminate in line with the non-widened part of the inboard and outboard sides of the wrap portions at a position where the stresses acting on the welds in use may be raised, thus increasing the risk of a failure in the weld. Smooth arcuate transition portions are provided between the widened portions and non-widened portions of the outboard and inboard edges of the axle wrap portions 356a and 356b.

Referring in particular to Figure 11, one edge-to-edge connection is illustrated in more detail before any welding has occurred, but with both axle wrap portions 356a an 356b offered up to an axle 42. It can be seen that each edge 360 has a particular profile. In this case the profile is formed by casting the arm as a single piece and subsequently machining the wrap portions 356a and 356b to give the required shape of the edges 360. In another embodiment, the front and rear sections of the arm 352 and 354 may be separately cast with the edge shapes already provided therein.

Specifically, and working radially inwards, each edge 360 comprises a substantially planar surface 390 angled between 10° and 50° preferably around 30° to a radius of the wrap. This surface extends approximately 8 mm radially inwardly. A further surface 392 is then provided which extends approximately 1mm radially inwardly and is substantially parallel to a radius of the wrap. Finally, the innermost portion of the edge comprises undercut 394 that extends circumferentially for approximately 6 mm and terminates in a curved section to provide a smooth transition to the radially innermost face of the wrap. The undercut portion 394 has a depth of approximately 3 mm. The total thickness of the axle wrap portions at this region is therefore less than 20 mm and preferably less than 50 mm. This is particularly advantageous at the top of the arm 332, since it means that the arm may be used in "low mount" or low ride height applications without the arm fouling on the chassis above. the thickness of the wraps 356a and 356b is preferably optimised to provided sufficient strength and stiffness without adding unnecessary weight to the arm 332.

Assembly of the front and rear portion 352 and 354 of the arm 332 around the axle 42 is as follows:

The front and rear axle wrap portion 356a and 356b are offered up to the axle 42. the radius of the axle 42 and of the wrap portions are dimensioned to provide a close fit between the outer face of the axle 42 and the inner faces of the wrap portions 356a and 356b. This may be achieved by machining the surfaces. The external radius of the axle is ideally substantially identical to the internal radius of the arm (e.g. both are 126 mm). The tolerance in the radius of each wrap portion is preferably +0.1 mm -0 mm and the tolerance in the radius of the axle is preferably +0 mm -0.1 mm. In other words, the axle 42 should not be too large to fit within the axle wrap portions 356a and 356b, although a number of the advantages of the arm to axle connection may still apply if the tolerance is greater. However, the wrap portions 356a and 356b should be dimensioned circumferentially such that there is a gap of approximately 3 mm between the opposing surfaces 392 when the wrap portions are in place around the axle 42. Once the wrap portions have been offered up to the axle 42, a backing strip 396 that is approximately 15 mm wide and 3 mm deep is inserted into the undercut portion 394. The strip 396 is preferably made from a relatively soft metal such as mild steel or a copper alloy and is provided to prevent subsequent welds from fusing the wrap portion 356a and 356b to the axle 42. The backing strip has also been found to improve the integrity of the weld by giving good root fusion.

In other embodiments, the backing strip may be replaced by a lip provided on one of the wrap edges 360 that mate together, or a ceramic coating on the axle, for example.

The welding procedure is as follows:

A "root pass" and first fill pass are carried out along one of the joints between edges 360. Root passes and one or more fill passes are then carried out along the second joint until this is complete. The welding procedure may require as many as five separate passes. A completed transverse weld 397 having five passes is shown in Figure 24A. The remaining weld passes are then completed on the first joint. The welding is preferably carried out using a metal inert gas (MIG) or a metal active gas (MAG) process and a AR20CO₂ shielding gas mixture using a 1.2 mm dia wire. These transverse welds are then allowed to cool naturally, which causes them to contract and pull the front and rear axle wrap portion 356a and 356b more tightly around the axle 42 such that the wrap portions are in tension and the axle is in compression.

The welds around the edge of openings 358 and 359 are then carried out by welding around the entire circumference of each edge in multiple passes (again up to 5 separate passes) to weld the openings to the axle. The circumference of each window is prepared such that there is approximately a 90° angle between the intersection of the edge of each window and the axle, and such that there is a close fit between the wrap and the axle around the intersection of the edge. To enhance the durability of the welds, it is preferred that each weld run starts and finishes away from the corners of each opening 358 and 359. A cross-sectional view through a completed opening edge weld 398 is shown in Figure 13. It will be appreciated the openings 358 and 359 are located close to the neutral axis of the axle, where bending stresses of the axle, in use, are at their lowest.

It has been found that the welding procedure outlined above gives a particularly high strength and durable connection between the trailing arm and axle when fitted to a vehicle and operated in normal circumstances. In some circumstances, it has been noted that the transverse welding causes the edges 360 of the front and rear wrap portions 356a and 356b to lift clear of the axle by a small amount, which coupled with the close fit of the remainder of the axle wrap, may enhance durability.

It is envisaged that if robotic welding techniques are to be used, the number of passes required at each joint may be reduced significantly, whilst still giving adequate strength to the connection.

It is also believed that the above described wrap to axle connection may enable thinner axle tubes to be used (e.g. 11 mm rather than 13 mm) to give the required strength for each axle, whilst saving weight. These benefits are thought to have been achieved due to a combination of the positioning of the welds in the wrap, and the wrap being highly rigid and homogeneous, so that it effectively distributes bending stresses and loads from the axle through the arm, and also because the arrangement inhibits the axle bending locally around the welds due to its close fit.

This welding method has been found to improve the durability of the connection between arm and axle. In particular it has been noted that providing the front opening 358 inboard of the web appears to be particularly effective in transmitting torsional loads induced in the axle due to vehicle roll through the wrap and into the arm. It should also be realised that by extending the axle wrap inboard, the contact area of the wrap with the axle may be increased without interfering with the fitment of brakes and the like to the outboard end of the axle 42. In turn, this increased contact area enables the size of the openings to be increased so that the length of the weld runs around the edges of the openings increases, and so does the strength of the connection.

It will be appreciated that the arm (not shown) provided for the opposite side of a vehicle is asymmetric with the arms of the present invention described above and is essentially a mirror image of those arms in order that the various features of the arm may be provided in appropriate locations. However, it should be noted that the rear sections 354 and 454 may be interchanged between opposite sides of a vehicle so that the air spring mounting surface 350, 450, is moved inboard to allow more clearance for vehicle wheels. This is particularly applicable when the arm is to be used with dual-wheel type vehicles. The rear sections 354 and 454 may also be altered to provide for different ride-height versions of the trailing arm without requiring alteration of the front section.

It should be understood that terms such as front, rear, top, bottom, inboard and outboard as used herein to describe the orientation of the various components are for illustrative purposes only and should not be construed as limiting with respect of the orientation in which the trailing arm may be fitted in a particular vehicle. Similarly, any dimensions are used for illustrative purposes only, and should not be construed as limiting, unless specifically claimed. It should be understood that arms according to the present invention may also be used as leading arms in which the mounting bracket is arranged aft of the air spring on a vehicle.

It will further be appreciated that numerous changes may be made within the scope of the present invention. For example, the trailing arm may be provided with an integral bracket for the fitment of drum rather than disc brakes, or an integral cast drum brake component may be provided on the arm. The arm may be adapted for use with alternatives to air springs, such as coil springs, for example, and may be fitted to monocoque-type chassis. Additional features may be cast into the arm such as height control valve mountings and mountings for ABS and other sensors. The arm may be cast from three or more pieces should this be desirable, or if a particular design of arm necessitates further cast pieces. The cast pieces may be secured together by other means such as bolts. The bracket for mounting a brake may be non-cast (e.g. fabricated). The arm may be adapted to receive non-circular (e.g. square) axles and may mount stub as well as beam axles.

## Claims

1. A suspension trailing arm (332, 432) for suspending a vehicle chassis (25) from a beam type axle (42), the trailing arm (332, 432) comprising a chassis mounting feature (346, 446), an axle mounting feature (356, 456), and an arm portion (352, 452) intermediate the chassis mounting feature (346, 446) and an axle mounting feature (356, 456), **characterised in that** the arm portion (352, 452) comprises a generally X-section profile having four limbs (374a, 374b, 374c, 374d).

2. A trailing arm according to claim 1 wherein the profile varies along the length of the arm portion (352, 452).

3. A trailing arm according to claim 2 wherein the angle of one of the limbs (374a, 374b, 374c, 374d) varies with respect to a neighbouring limb along the length of the arm portion (352, 452).

4. A trailing arm according to claim 2 or claim 3 wherein the thickness of one of the limbs (374a, 374b, 374c, 374d) varies along the length of the arm portion (352, 452).

5. A trailing arm according to claims 2 to 4 wherein the radial length of one of the limbs (374a, 374b, 374c, 374d) varies along the length of the arm portion (352, 452).

6. A trailing arm according to any preceding claim wherein the thickness of one of the limbs (374a, 374b, 374c, 374d) varies along the radial length of the limb (352, 452).

7. A trailing arm according to claim 6 wherein one of the limbs (374a, 374b, 374c, 374d) terminates in an enlarged free end portion (376a, 376b, 376c, 376d).

8. A trailing arm according to any preceding claim wherein the limbs (374a, 374b ,374c, 374d) are orientated to provide a trough facing upwards when installed.

9. A trailing arm according to any preceding claim wherein the chassis mounting feature (346, 446) is integral and/or the axle mounting feature (356, 456) is integral and/or the trailing arm (332, 432) further comprises an integral damper mount (385, 485).

10. A trailing arm according to claim 9 wherein the integral damper mount (485) is positioned so as to permit a damper (444) to be located in a trough between two limbs (374a, 374b, 374c, 374d).

11. A trailing arm according to any preceding claim wherein the arm (332, 432) comprises a recess to provide clearance for brake components.

12. A trailing arm according to any preceding claim wherein the axle mounting feature (356, 456) is configured to mount a beam-type axle.

13. A trailing arm according to claim 14 wherein the axle mounting feature (356, 456) comprises a bore extending transversely through the trailing arm (332, 432), the bore being dimensioned to receive a beam-type axle.

14. A trailing arm according to any preceding claim wherein the axle mounting feature (356, 456) comprises first (356a, 456a) and second (356b, 456b) semi-cylindrical axle wraps;

15. A heavy vehicle suspension assembly comprising a trailing arm (332, 432) according to any preceding claim.

## Patentansprüche

1. Aufhängungslängslenker (332, 432) zum Aufhängen eines Fahrzeugchassis (25) an einer Trägerachse (42), wobei der Längslenker (332, 432) ein Chassismontagemerkmal (346, 446), ein Achsenmontagemerkmal (356, 456) und einen Lenkerteil (352, 452) zwischen dem Chassismontagemerkmal (346, 446) und dem Achsenmontagemerkmal (356, 456) umfasst, **dadurch gekennzeichnet, dass** der Lenkerteil (352, 452) ein allgemeines X-Profil mit vier Schenkeln (374a, 374b, 374c, 374d) umfasst.

2. Längslenker nach Anspruch 1, wobei das Profil entlang der Länge des Lenkerteils (352, 452) variiert.

3. Längslenker nach Anspruch 2, wobei der Winkel eines der Schenkel (374a, 374b, 374c, 374d) bezüglich eines benachbarten Schenkels entlang der Länge des Lenkerteils (352, 452) variiert.

4. Längslenker nach Anspruch 2 oder 3, wobei die Dicke eines der Schenkel (374a, 374b, 374c, 374d) entlang der Länge des Lenkerteils (352, 452) variiert.

5. Längslenker nach den Ansprüchen 2 bis 4, wobei die radiale Länge eines der Schenkel (374a, 374b, 374c, 374d) entlang der Länge des Lenkerteils (352, 452) variiert.

6. Längslenker nach einem vorhergehenden Anspruch, wobei die Dicke eines der Schenkel (374a, 374b, 374c, 374d) entlang der radialen Länge des Schenkels (352, 452) variiert.

7. Längslenker nach Anspruch 6, wobei einer der Schenkel (374a, 374b, 374c, 374d) in einem vergrößerten freien Endteil (376a, 376b, 376c, 376d) endet.

8. Längslenker nach einem vorhergehenden Anspruch, wobei die Schenkel (374a, 374b, 374c, 374d) dazu ausgerichtet sind, nach der Installation eine nach oben weisende Wanne zu bilden.

9. Längslenker nach einem vorhergehenden Anspruch, wobei das Chassismontagemerkmal (346, 446) integral ist und/oder das Achsenmontagemerkmal (356, 456) integral ist und/oder der Längslenker (332, 432) weiterhin eine integrale Dämpferhalterung (385, 485) umfasst.

10. Längslenker nach Anspruch 9, wobei die integrale Dämpferhalterung (485) so positioniert ist, dass sie die Positionierung eines Dämpfers (444) in einer Wanne zwischen zwei Schenkeln (374a, 374b, 374c, 374d) gestattet.

11. Längslenker nach einem vorhergehenden Anspruch, wobei der Lenker (332, 432) eine Aussparung zur Bereitstellung von Spiel für Bremsbauteile umfasst.

12. Längslenker nach einem vorhergehenden Anspruch, wobei das Achsenmontagemerkmal (356, 456) dazu konfiguriert ist, eine Trägerachse zu befestigen.

13. Längslenker nach Anspruch 14, wobei das Achsenmontagemerkmal (356, 456) eine Bohrung umfasst, die quer durch den Längslenker (332, 432) verläuft, wobei die Bohrung zur Aufnahme einer Trägerachse dimensioniert ist.

14. Längslenker nach einem vorhergehenden Anspruch, wobei das Achsenmontagemerkmal (356, 456) eine erste (356a, 456a) und eine zweite (356b, 356b) halbzylindrische Achsenummantelung umfasst.

15. Schwerfahrzeugaufhängungsanordnung, die einen Längslenker (332, 432) nach einem vorhergehenden Anspruch umfasst.

## Revendications

1. Bras de remorque à suspension (332, 432), pour assurer la suspension d'un châssis de véhicule (25) depuis un essieu de type barre (42), le bras de remorque (332, 432) comprenant un élément de montage de châssis (346, 446) et un élément de montage d'essieu (356, 456), et une portion de bras (352, 452) entre l'élément de montage de châssis (346, 446) et un élément de montage d'essieu (356, 456), **caractérisé en ce que** la portion de bras (352, 452) comprend un profilé généralement de section en forme de X ayant quatre membres (374a, 374b, 374c, 374d).

2. Bras de remorque selon la revendication 1, dans lequel le profilé varie le long de la longueur de la portion de bras (352, 452).

3. Bras de remorque selon la revendication 2, dans lequel l'angle de l'un des membres (374a, 374b, 374c, 374d) varie en fonction d'un membre adjacent le long de la longueur de la portion de bras (352, 452).

4. Bras de remorque selon la revendication 2 ou 3, dans lequel l'épaisseur de l'un des membres (374a, 374b, 374c, 374d) varie le long de la longueur de la portion de bras (352, 452).

5. Bras de remorque selon les revendications 2 à 4, dans lequel la longueur radiale de l'un des membres (374a, 374b, 374c, 374d) varie le long de la longueur de la portion de bras (352, 452).

6. Bras de remorque selon l'une quelconque des revendications précédentes, dans lequel l'épaisseur de l'un des membres (374a, 374b, 374c, 374d) varie le long de la longueur radiale du membre (352, 452).

7. Bras de remorque selon la revendication 6, dans lequel l'un des membres (374a, 374b, 374c, 374d) se termine par une portion d'extrémité libre agrandie (376a, 376b, 376c, 376d).

8. Bras de remorque selon l'une quelconque des revendications précédentes, dans lequel les membres (374a, 374b, 374c, 374d) sont orientés de manière à former une auge orientée vers le haut lorsqu'ils sont installés.

9. Bras de remorque selon l'une quelconque des revendications précédentes, dans lequel l'élément de montage de châssis (346, 446) est intégré, et/ou l'élément de montage d'essieu (356, 456) est intégré et/ou le bras de remorque (332, 432) comprend en outre une fixation d'amortisseur intégrée (385, 485).

10. Bras de remorque selon la revendication 9, dans lequel la fixation d'amortisseur intégrée (485) est positionnée de manière à permettre à un amortisseur (444) d'être placé dans une auge entre deux membres (374a, 374b, 374c, 374d).

11. Bras de remorque selon l'une quelconque des revendications précédentes, dans lequel le bras (332, 432) comprend un retrait pour assurer un dégagement pour des composants de frein.

12. Bras de remorque selon l'une quelconque des revendications précédentes, dans lequel l'élément de montage d'essieu (356, 456) est configuré pour supporter un essieu de type barre.

13. Bras de remorque selon la revendication 14, dans lequel l'élément de montage d'essieu (356, 456) comprend un alésage s'étendant transversalement à travers le bras de remorque (332, 432), l'alésage étant dimensionné pour recevoir l'essieu de type barre.

14. Bras de remorque selon l'une quelconque des revendications précédentes, dans lequel l'élément de montage d'essieu (356, 456) comprend des premiers (356a, 456a) et des deuxièmes (356b, 456b) enveloppements d'essieu semi-cylindriques.

15. Ensemble de suspension pour véhicule poids lourd, comprenant un bras de remorque (332, 432) selon l'une quelconque des revendications précédentes.
